# EUROPÄISCHE PATENTSCHRIFT

(11) **EP 1 616 789 B1**
(45) Veröffentlichungstag und Bekanntmachung des Hinweises auf die Patenterteilung: **16.08.2006**
(21) Anmeldenummer: 04016427.9
(22) Anmeldetag: 13.07.2004
(51) Int. Cl.: B64F 1/28, B67D 5/01, F16L 27/08

(54) **Kopfstück für Betankungssysteme**
Head assembly for refuelling systems
Tête de ligne pour dispositif de ravitaillement en carburant

(43) Veröffentlichungstag der Anmeldung: 18.01.2006
(73) Patentinhaber: von Meyerinck, Wolfgang, Dipl.-Ing., D-35457 Lollar (DE)
(72) Erfinder: von Meyerinck, Wolfgang, Dipl.-Ing., D-35457 Lollar (DE)
(74) Vertreter: von den Steinen, Axel

(56) Entgegenhaltungen:
- EP-A- 0 166 800
- DE-A- 3 523 472
- US-A- 3 651 832
- US-A- 3 891 004
- US-A- 4 658 874
- US-A- 4 993 463

## Beschreibung

Die Erfindung betrifft ein Kopfstück für bewegliche oder ortsfeste Betankungssysteme mit einer Betankungskupplung für den Anschluss an einen Tank, wobei für den Durchfluss des Treibstoffs mehrere starre Rohrabschnitte vorgesehen sind.

Bei der Betankung von Fahrzeugen und insbesondere von Flugzeugen, vor allem dann, wenn sie im militärischen Bereich eingesetzt sind, müssen große Treibstoffmengen in kürzester Zeit von einem Hydrantensystem, einem Schlauchwagen oder einem Tankwagen in den zu befüllenden Tank umgeschlagen werden. Problematisch bei der Betankung sind insbesondere die letzten 20 m bis 30 m, die vom Betankungswagen bzw. Hydrantensystem bis zum zu füllenden Tank zu überwinden sind.

Aus dem Stand der Technik sind Schläuche bekannt, die an ihren vorderen Ende mit einer Betankungskupplung versehen sind, so dass der Betankungsvorgang unmittelbar nach dem Ankuppeln an die Füllöffnung erfolgen kann.

Aus der EP 0 166 800 B 1 ist weiterhin ein Kopfstück für bewegliche oder ortsfeste Betankungssysteme bekannt, mit einer Betankungskupplung für den Anschluss an den zu füllenden bzw. zu entleerenden Tank, wobei das Kopfstück aus einer aus fünf Rohrstücken gebildeten Rohrleitung besteht, die jeweils durch Drehgelenke mit jeweils einem Freiheitsgrad miteinander verbunden sind.

Nachteilig an den aus dem Stand der Technik bekannten Betankungssystemen ist jedoch, dass die bekannten Betankungssysteme erheblichen Handhabungsschwierigkeiten unterliegen. So stellen Schläuche wegen ihrer Anfälligkeit und der Hitzeempfindlichkeit ein hohes Sicherheitsrisiko dar, insbesondere bei Verwendung in Nähe heißer Turbinen und Motoren bzw. in der Nähe von laufenden Turbinen. Diese Nachteile erfordern gleichzeitig eine intensive Wartungs- und Überprüfungstätigkeit, die vor, während und/oder nach jedem Betankungsvorgang zu erfolgen hat. Die aus dem Stand der Technik bekannten starren Kopfstücke bzw. Betankungssysteme hingegen weisen den erheblichen Nachteil auf, dass das Kopfstück in seiner starren Ausführungsform nur sehr schwer gehandhabt werden kann bzw. nur sehr aufwendig und unter höheren Kraftanstrengungen an den Tankstutzen des zu betankenden Fahr- bzw. Flugzeugs angeschlossen werden kann.

Aus der DE 35 23 472 A1 (entspricht dem Obergriff des Anspruchs 1) ist eine Verladevorrichtung für fließfähige Güter bekannt, an der ein höhenverstellbares Kopfstück vorgesehen ist.

Die US 43463 beschreibt ein Kopfstück mit mehreren über Drehgelenke verbundenen Rohrabschnitten, dass in eine Umhausung eingefaltet werden kann.

Der Erfindung liegt somit die Aufgabe zugrunde, ein schlauchloses Kopfstück für Betankungsanlagen zu schaffen, das ohne Handhabungsschwierigkeiten, in einfacher Weise zu bedienen ist und praktisch momentenfrei an die Flugzeugkupplung oder anderweitige Anschlusskupplungen anschließbar ist, das einen geringen Wartungsaufwand erfordert, sowohl für die Be- als auch für die Enttankung geeignet ist, und die Möglichkeit bietet das Kopfstück mit einem außerordentlich geringen Kraftaufwand an das Fahr- bzw. Flugzeug anzuschließen.

Diese Aufgabe wird durch ein Kopfstück nach der Lehre des Patentanspruchs 1 gelöst.

In zunächst bekannter Art und Weise weist das Kopfstück für bewegliche oder ortsfeste Betankungssysteme eine Betankungskupplung für den Anschluss an einen Tank auf, wobei für den Durchfluss des Treibstoffs mehrere starre Rohrabschnitte vorgesehen sind, wobei die Rohrabschnitte zur verstellbaren räumlichen Anordnung der Betankungskupplung mit mehreren Drehgelenken verbunden sind, und wobei zur Höhenverstellung der Betankungskupplung zumindest ein erstes Drehgelenk um eine Horizontalschwenkachse verschwenkbar ist. Die für das erfindungsgemäße Kopfstück angegebene Nummerierung der Drehgelenke und Rohrabschnitte beschreibt nicht die Reihenfolge der Bauteile am Kopfstück, sondern soll lediglich eine eindeutige Zuordnung der angegebenen Bezeichnungen zu den Bauteilen am Kopfstück ermöglichen.

Gattungsgemäß zeichnet sich das vorgeschlagene Kopfstück dadurch aus, dass das erste Drehgelenk über einen ersten starren Rohrabschnitt mit einem direkt benachbarten zweiten Drehgelenk verbunden ist, wobei auch das zweite Drehgelenk um eine Horizontalschwenkachse verschwenkbar ist. Diese Anordnung erlaubt es, das Kopfstück in nahezu allen beliebigen Freiheitsgraden auszurichten und an die Betankungskupplung des Fahr- bzw. Flugzeugs anzuschließen.

Dabei kann das zweite Drehgelenk in Betankungsrichtung des Treibstoffs so angeordnet sein, dass es dem ersten Drehgelenk nachgeordnet ist.

Weiterhin können die Drehgelenke so angeordnet sein, dass die Horizontalschwenkachse des ersten Drehgelenks und die Horizontalschwenkachse des zweiten Drehgelenks parallel zueinander verlaufen können.

Weiterhin sind die Drehgelenke gattungsgemäß so angeordnet, dass das erste Drehgelenk über einen zweiten starren Rohrabschnitt mit einem direkt benachbarten dritten Drehgelenk verbunden ist, wobei das dritte Drehgelenk um eine Vertikalschwenkachse verschwenkbar ist.

Das dritte Drehgelenk selber kann in Betankungsvorrichtung des Treibstoffs dem ersten Drehgelenk vorgeordnet sein.

Weiterhin ist das zweite Drehgelenk gattungsgemäß über einen dritten starren Rohrabschnitt mit einem direkt benachbarten vierten Drehgelenk verbunden , wobei das vierte Drehgelenk um eine Vertikalschwenkachse verschwenkbar ist.

Das vierte Drehgelenk wiederum kann in Betankungsrichtung des Treibstoffs dem zweiten Drehgelenk nachgeordnet sein.

Eine weitere Ausführungsform der Erfindung sieht vor, dass die Vertikalschwenkachse des dritten Drehgelenks und die Vertikalschwenkachse des vierten Drehgelenks parallel zueinander verlaufen können.

Erfindungsgemäß ist das vierte Drehgelenk über einen vierten starren Rohrabschnitt mit einem direkt benachbarten fünften Drehgelenk verbunden, wobei das fünfte Drehgelenk um eine Horizontalschwenkachse verschwenkbar ist.

In weiterer Anordnung kann das fünfte Drehgelenk über einen fünften starren Rohrabschnitt mit einem direkt benachbarten sechsten Drehgelenk verbunden sein, wobei das sechste Drehgelenk um eine Schwenkachse verschwenkbar sein kann, die um 90° zur Horizontalschwenkachse des fünften Drehgelenks versetzt sein kann.

Das sechste Drehgelenk wiederum kann über einen sechsten starren Rohrabschnitt mit der Betankungskupplung verbunden sein, wobei das dritte Drehgelenk über einen siebten starren Rohrabschnitt mit dem Betankungssystem verbunden sein kann.

Eine bevorzugte Ausführungsform der Erfindung sieht vor, dass am Kopfstück eine Balanceeinrichtung vorgesehen sein kann, mit der zumindest ein Rohrabschnitt in der Schwebe gehalten werden kann. Mithilfe dieser Balanceeinrichtung, ist es möglich das Kopfstück mit minimalem Kraftaufwand so auszurichten, dass ein bequemer und sicherer Anschluss der Betankungskupplung an die Tankkupplung des zu befüllenden Fahr- bzw. Flugzeugs ermöglicht wird.

Die Balanceeinrichtung selber kann dabei so ausgelegt sein, dass sie den ersten starren Rohrabschnitt in der Schwebe halten kann. Dazu kann die Balanceeinrichtung zwischen dem ersten Drehgelenk und dem zweiten starren Rohrabschnitt angeordnet sein.

Eine weitere bevorzugte Ausführungsform der Erfindung sieht vor, dass die Balanceeinrichtung aus einem vorgespannten Federpaket bestehen kann. Es ist natürlich auch denkbar die Balanceeinrichtung in einer anderen Art und Weise auszugestalten. In welcher Art und Weise die Balanceeinrichtung genau ausgestaltet ist spielt erfindungsgemäß jedoch keine Rolle.

Eine weitere besondere bevorzugte Ausführungsform der Erfindung sieht vor, dass die Vorspannung des Federpakets, einstellbar sein kann. Somit kann die Balanceeinrichtung auch nach Erweiterung bzw. Reduzierung verschiedener starrer Rohrabschnitte bzw. Drehgelenke den neuen Kraftverhältnissen angepasst werden.

Eine nächste besonders bevorzugte Ausführungsform der Erfindung sieht vor, dass am Kopfstück ein Parallelhebelantrieb vorgesehen sein kann, mit dem die Vertikalschwenkachse des vierten Drehgelenks beim Verschwenken des ersten starren Rohrabschnitts um die Horizontalschwenkachse des ersten Drehgelenks in ihrer vertikalen Position gehalten werden kann. Das heißt, dass eine besonders einfache Höhenausrichtung der Betankungskupplung beim Anschluss an einen Tank erfolgen kann.

Der parallele Hebelantrieb selber kann so ausgelegt sein, dass er vom ersten starren Rohrabschnitt, dem dritten starren Rohrabschnitt und zwei Verbindungshebeln gebildet werden kann, wobei der erste Verbindungshebel in einer vertikal gerichteten Position starr befestigt sein kann, und wobei der zweite Verbindungshebel parallel zum ersten starren Rohrabschnitt angeordnet sein kann, und wobei der zweite Verbindungshebel gelenkig mit dem dritten starren Rohrabschnitt verbunden sein kann, und wobei der zweite Verbindungshebel gelenkig mit dem ersten Verbindungshebel verbunden sein kann.

Ein Ausführungsbeispiel der Erfindung ist in der folgenden Zeichnung näher beschrieben.

Es zeigt:

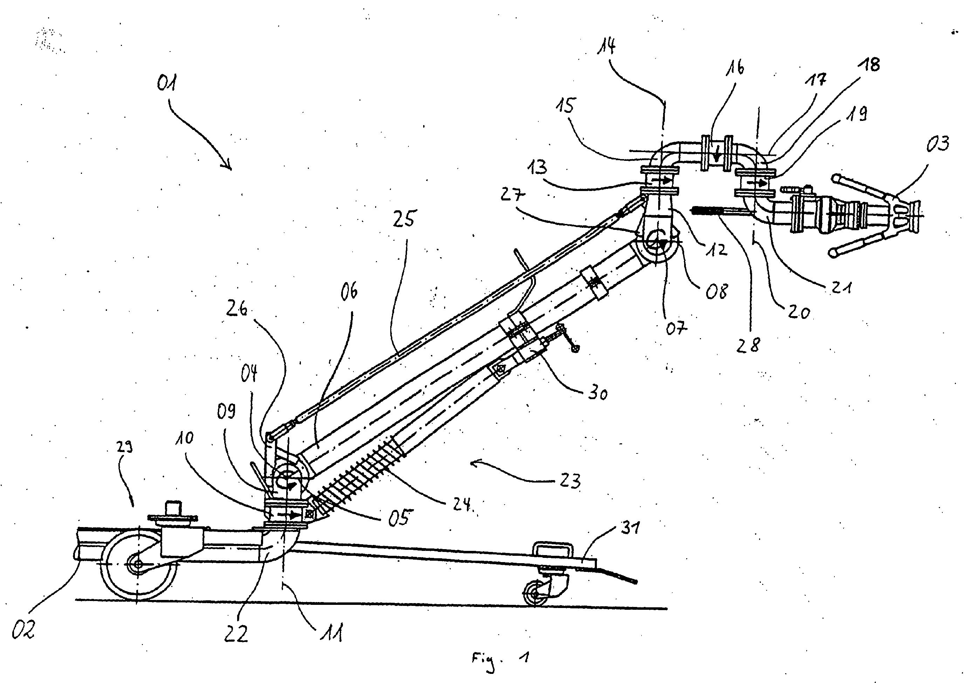

- **Fig. 1**: eine Seitenansicht eines erfindungsgemäß ausgebildeten Kopfstücks eines Betankungssystems.

Das in **Fig. 1** dargestellte Kopfstück 01 besteht aus mehreren Drehgelenken 04, 07, 10, 13, 16, 19 und mehreren mit den Drehgelenken verbundenen starren Rohrabschnitten 06, 09, 12, 15, 18, 21 und 22. Dem sechsten Drehgelenk 19 ist über einen sechsten starren Rohrabschnitt 21 eine Betankungskupplung 03 nachgelagert. Am starren Rohrabschnitt 21 ist zudem ein Griffstück 28 vorgesehen, mit dem das Kopfstück 01 geführt werden kann. Am unteren Ende ist das Kopfstück 01 über den starren Rohrabschnitt 22 mit einem hier nur teilweise dargestellten Betankungssystem 02 verbunden. Um das Kopfstück 01 fahrbar zu gestalten, ist das Kopfstück 01 auf einem plateauartigen Rollwagen 29 angeordnet, der in **Fig. 1** lediglich teilweise dargestellt ist. Der Rollwagen 29 kann mittels einer Deichsel 31 von Hand verfahren werden

Über die am Kopfstück 01 angeordneten Drehgelenke 04, 07, 10, 13, 16 und 19 kann das Kopfstück 01 in nahezu jede beliebige Freiheitsrichtung verstellt und ausgerichtet werden. Um eine möglichst genaue Verstellung des Kopfstücks 01 zu gewährleisten bzw. das Einführen der Betankungskupplung 03 in den Tank des Fahr- bzw. Flugzeugs zu vereinfachen, ist das Kopfstück 01 mit einer Balanceeinrichtung 23 versehen. Diese Balanceeinrichtung 23 besteht hierbei im Wesentlichen aus einem vorgespannten Federpaket 24, welches über eine Verstelleinrichtung 30 einstellbar ist. Die Vorspannung des Federpakets 24 ist über die Verstelleinrichtung 30 einstellbar, so dass die Vorspannung des Federpaktes 24 so gewählt werden kann, dass hierdurch das Gewicht der starren Rohrstücke 06, 12, 15, 18, 21, der Betankungskupplung 03 sowie der Drehgelenke 07, 13, 16 und 19 aufgenommen wird. Durch diesen Gewichtsausgleich ist es für einen einzigen Mann ohne Mühe möglich, die Betankungskupplung an das entsprechende Tankventil anzuschließen.

Damit das Kopfstück 01 möglichst kraftsparend für den Benutzer am Tankstutzen des Fahr- bzw. Flugzeugs angelegt werden kann, ist am Kopfstück 01 ein Parallelhebelantrieb 25 vorgesehen. Mithilfe dieses Parallelhebelantriebs 25 wird die Vertikalschwenkachse 14 des vierten Drehgelenks 13 beim Verschwenken des ersten starren Rohrabschnitts 06 um die Horizontalschwenkachse 05 des ersten Drehgelenks 04 in ihrer vertikalen Position gehalten. Der Parallelhebelantrieb 25 ist über zwei Verbindungshebel 26, 27 mit den Drehgelenken 04, 07 bzw. den starren Rohrabschnitten 09 und 12 verbunden.

Durch die Anordnung eines solchen Parallelhebelantriebs 25 in Verbindung mit den beiden horizontal drehbar gelagerten Drehlagern 04 bzw. 07 kann das Kopfstück 01 sehr genau und ohne größere Kraftanstrengungen verstellt werden. Des Weiteren kann mit der Anordnung eines solchen Parallelhebelantriebs 25 gewährleistet werden, dass die Betankungskupplung 03 sicher in einer bestimmten Position, insbesondere einer waagrechten Position, gehalten werden kann, was den Anschluss an den Tankstutzen des Fahr- bzw. Flugzeugs erheblich vereinfacht.

Um die zum Anschluss an den zu betankenden Tankstutzen notwendige Position der Betankungskupplung 03 einstellen zu können, sind die starren Rohrabschnitte 15, 18, 21 bogenförmig ausgebildet. Am Ende des bogenförmigen starren Rohrabschnitts 21 schließt sich die Betankungskupplung 03 an, die in bekannter Art und Weise als sogenannte Betankungstrockenkupplung ausgebildet ist, die den Anschluss der unter Druck stehenden Rohrleitung an einen entsprechend ausgebildeten Betankungsadapter gestattet. Durch verschwenken der Drehgelenke 07, 16 und 19 kann die Betankungskupplung 03 nach Einstellung der gewünschten Höhe durch vertikales Kippen und horizontales Verschwenken der Rohrabschnitte 15, 18, 21 geeignet positioniert werden.

Da das Kopfstück im Wesentlichen aus Rohrstücken besteht, kann es gleichermaßen gut für die Be- wie auch zur Enttankung eingesetzt werden. Durch die hohe Anzahl der Drehgelenke ist die Anschlussfläche der Betankungskupplung 03 in jeder beliebigen Richtung im Raum auszurichten.

Ein weiterer Vorteil der Rohrstücke bzw. Rohrabschnitte liegt darin, dass die einzelnen Rohrabschnitte der erforderlichen Betankungsleistung angepasst sind, so dass eine sehr schnelle Betankungszeit garantiert werden kann.

Darüber hinaus gewährleistet die Verwendung der Balanceeinheit 23 in Verbindung mit dem Parallelhebelantrieb 25 am Kopfstück 01 eine einfache und mühelose Einmannbedienung, da die Vertikalschwenkachse auch bei Höhenverstellung der Betankungskupplung 03 jeweils in ihrer Vertikalausrichtung gehalten wird, so dass der vierte Rohrabschnitt 15 nicht Abkippen kann.

Da das Kopfstück 01 nicht aus Schläuchen gebildet ist, sondern aus starren Rohrstücken und zwischen den Rohrstücken vorgesehenen Drehgelenken besteht, können die Rohrstücke bei Bedarf auch mit Rädern ausgestattet werden, wodurch das Verfahren des Betankungssystems ermöglicht wird.

Da das Kopfstück 01 nicht aus Schläuchen gebildet ist, sondern aus starren Rohrstücken und zwischen den Rohrstücken vorgesehenen Drehgelenken besteht, können die Rohrstücke bei Bedarf auch mit Rädern ausgestattet werden, wodurch das Verfahren des Betankungssystems ermöglicht wird.

### Bezugszeichenliste

- 01: Kopfstück
- 02: Betankungssystem
- 03: Betankungskupplung
- 04: erstes Drehgelenk
- 05: Horizontalschwenkachse
- 06: erster starrer Rohrabschnitt
- 07: zweites Drehgelenk
- 08: Horizontalschwenkachse
- 09: zweiter starrer Rohrabschnitt
- 10: drittes Drehgelenk
- 11: Vertikalschwenkachse
- 12: dritter starrer Rohrabschnitt
- 13: viertes Drehgelenk
- 14: Vertikalschwenkachse
- 15: vierter starrer Rohrabschnitt
- 16: fünftes Drehgelenk
- 17: Horizontalschwenkachse
- 18: fünfter starrer Rohrabschnitt
- 19: sechstes Drehgelenk
- 20: Schwenkachse
- 21: sechster starrer Rohrabschnitt
- 22: siebter starrer Rohrabschnitt
- 23: Balanceeinrichtung
- 24: Federpaket
- 25: Parallelhebelantrieb
- 26: Verbindungshebel
- 27: Verbindungshebel
- 28: Griffstück
- 29: Rollwagen
- 30: Verstelleinrichtung
- 31: Deichsel

## Patentansprüche

1. Kopfstück (01) für bewegliche oder ortsfeste Betankungssysteme (02) mit einer Betankungskupplung (03) für den Anschluss an einen Tank, wobei für den Durchfluss des Treibstoffs mehrere starre Rohrabschnitte (06, 09, 12, 15, 18, 21, 22) vorgesehen sind, und wobei die Rohrabschnitte (06, 09, 12, 15, 18, 21, 22) zur verstellbaren räumlichen Anordnung der Betankungskupplung mit mehreren Drehgelenken (04, 07, 10, 13, 16, 19) verbunden sind, und wobei zur Höhenverstellung der Betankungskupplung zumindest ein erstes Drehgelenk (04) um eine Horizontalschwenkachse (05) verschwenkbar ist, und wobei das erste Drehgelenk (04) über einen ersten starren Rohrabschnitt (06) mit einem direkt benachbarten zweiten Drehgelenk (07) verbunden ist, und wobei auch das zweite Drehgelenk (07) um eine Horizontalschwenkachse (08) verschwenkbar ist, und wobei das erste Drehgelenk (04) über einen zweiten starren Rohrabschnitt (09) mit einem direkt benachbarten dritten Drehgelenk (10) verbunden ist, und wobei das dritte Drehgelenk (10) um eine Vertikalschwenkachse (11) verschwenkbar ist, und wobei das zweite Drehgelenk (07) über einen dritten starren Rohrabschnitt (12) mit einem direkt benachbarten vierten Drehgelenk (13) verbunden ist, und wobei das vierte Drehgelenk (13) um eine Vertikalschwenkachse (14) verschwenkbar ist,
**dadurch gekennzeichnet,**
**dass** das vierte Drehgelenk (13) über einen vierten (15) starren Rohrabschnitt mit einem direkt benachbarten fünften Drehgelenk (16) verbunden ist, wobei das fünfte Drehgelenk (16) um eine Horizontalschwenkachse (17) verschwenkbar ist.

2. Kopfstück nach Anspruch 1,
**dadurch gekennzeichnet,**
**dass** das zweite Drehgelenk (07) in Betankungsrichtung des Treibstoffes dem ersten Drehgelenk (04) nachgeordnet ist.

3. Kopfstück nach einem der Ansprüche 1 oder 2,
**dadurch gekennzeichnet**
**dass** die Horizontalschwenkachse (05) des ersten Drehgelenks (04) und die Horizontalschwenkachse (08) des zweiten Drehgelenks (07) parallel zueinander verlaufen.

4. Kopfstück nach einem der Ansprüche 1 bis 3,
**dadurch gekennzeichnet**
**dass** das dritte Drehgelenk (10) in Betankungsrichtung des Treibstoffes dem ersten Drehgelenk (04) vorgeordnet ist.

5. Kopfstück nach einem der Ansprüche 1 bis 4,
**dadurch gekennzeichnet**
**dass** das vierte Drehgelenk (13) in Betankungsrichtung des Treibstoffes dem zweiten Drehgelenk (07) nachgeordnet ist.

6. Kopfstück nach einem der Ansprüche 1 bis 5,
**dadurch gekennzeichnet,**
**dass** die Vertikalschwenkachse (11) des dritten Drehgelenks (10) und die Vertikalschwenkachse (14) des vierten Drehgelenks (13) parallel zueinander verlaufen.

7. Kopfstück nach einem der Ansprüche 1 bis 6,
**dadurch gekennzeichnet,**
**dass** das fünfte Drehgelenk (16) über einen fünften (18) starren Rohrabschnitt mit einem direkt benachbarten sechsten Drehgelenk (19)verbunden ist, wobei das sechste Drehgelenk (19) um eine Schwenkachse (20)verschwenkbar ist, die um 90° Grad zur Horizontalschwenkachse (17) des fünften Drehgelenks (16) versetzt ist.

8. Kopfstück nach Anspruch 7,
**dadurch gekennzeichnet,**
**dass** das sechste Drehgelenk (19) über einen sechsten starren Rohrabschnitt (21) mit der Betankungskupplung (03) verbunden ist.

9. Kopfstück nach einem der Ansprüche 1 bis 8,
**dadurch gekennzeichnet,**
**dass** das dritte Drehgelenk (10) über einen siebten starren Rohrabschnitt (22) mit dem Betankungssystem (02) verbunden ist.

10. Kopfstück nach einem der Ansprüche bis 9,
**dadurch gekennzeichnet,**
**dass** am Kopfstück (01)eine Balanceeinrichtung (23) vorgesehen ist, mit der zumindest ein Rohrabschnitt (06, 12, 15, 18, 21) und/oder zumindest ein Drehgelenk (07, 13, 16, 19) und/oder die Betankungskupplung (03) in der Schwebe gehalten wird.

11. Kopfstück nach Anspruch 10,
**dadurch gekennzeichnet,**
**dass** die Balanceeinrichtung (23) zumindest den ersten starren Rohrabschnitt (06) in der Schwebe hält.

12. Kopfstück nach Anspruch 11,
**dadurch gekennzeichnet,**
**dass** die Balanceeinrichtung (23) den ersten starren Rohrabschnitt (06) gegenüber dem zweiten starren Rohrabschnitt (09) abstützt.

13. Kopfstück nach einem der Ansprüche 10 bis 12,
**dadurch gekennzeichnet,**
**dass** die Balanceeinrichtung (23) aus einem vorgespannten Federpaket (24) besteht.

14. Kopfstück nach Anspruch 13,
**dadurch gekennzeichnet,**
**dass** die Vorspannung des Federpaketes (24) einstellbar ist

15. Kopfstück nach einem der Ansprüche 1 bis 16,
**dadurch gekennzeichnet,**
**dass** am Kopfstück (01) ein Parallelhebelantrieb (25) vorgesehen ist, mit dem die Vertikalschwenkachse (14) des vierten Drehgelenks (13) beim Verschwenken des ersten starren Rohrabschnitts (06) um die Horizontalschwenkachse (05) des ersten Drehgelenks (04) in ihrer vertikalen Position gehalten wird.

## Claims

1. A head piece (01) for movable or stationary refuelling systems (02) having a refuelling coupling (03) for connection to a tank, there being provided a plurality of rigid pipe sections (06, 09, 12, 15, 18, 21, 22) for the fuel flow-through, and the pipe sections (06, 09, 12, 15, 18, 21, 22) being connected to a plurality of swivel joints (04, 07, 10, 13, 16, 19) for the adjustable spatial arrangement of the refuelling coupling, and at least one first swivel joint (04) being capable of being swivelled about a horizontal swivel axis (05) for the height adjustment of the refuelling coupling, and the first swivel joint (04) being connected to a directly adjacent second swivel joint (07) by means of a first rigid pipe section (06), and the second swivel joint (07) also being capable of being swivelled about a horizontal swivel axis (08), and the first swivel joint (04) being connected to a directly adjacent third swivel joint (10) by means of a second rigid pipe section (09), and the third swivel joint (10) being capable of being swivelled about a vertical swivel axis (11), and the second swivel joint (07) being connected to a directly adjacent fourth swivel joint (13) by means of a third rigid pipe section (12), and the fourth swivel joint (13) being capable of being swivelled about a vertical swivel axis (14),
**characterised in that**
the fourth swivel joint (13) is connected to a directly adjacent fifth swivel joint (16) by means of a fourth (15) rigid pipe section, the fifth swivel joint (16) being capable of being swivelled about a horizontal swivel axis (I7).

2. A head piece according to claim 1,
**characterised in that**,
in the refuelling direction of the fuel, the second swivel joint (07) is positioned downstream of the first swivel joint (04).

3. A head piece according to one of claims 1 or 2,
**characterised in that**
the horizontal swivel axis (05) of the first swivel joint (04) and the horizontal swivel axis (08) of the second swivel joint (07) extend in a mutually parallel manner.

4. A head piece according to any one of claims 1 to 3,
**characterised in that**,
in the refuelling direction of the fuel, the third swivel joint (10) is positioned upstream of the first swivel joint (04).

5. A head piece according to any one of claims 1 to 4,
**characterised in that**,
in the refuelling direction of the fuel, the fourth swivel joint (13) is positioned downstream of the second swivel joint (07).

6. A head piece according to any one of claims 1 to 5,
**characterised in that**
the vertical swivel axis (11) of the third swivel joint (10) and the vertical swivel axis (14) of the fourth swivel joint (13) extend in a mutually parallel manner.

7. A head piece according to any one of claims 1 to 6,
**characterised in that**
the fifth swivel joint (16) is connected to a directly adjacent sixth swivel joint (19) by means of a fifth (18) rigid pipe section, the sixth swivel joint (19) being capable of being swivelled about a swivel axis (20) which is offset by 90° relative to the horizontal swivel axis (17) of the fifth swivel joint (16).

8. A head piece according to claim 7,
**characterised in that**
the sixth swivel joint (19) is connected to the refuelling coupling (03) by means of a sixth rigid pipe section (21).

9. A head piece according to any one of claims 1 to 8,
**characterised in that**
the third swivel joint (10) is connected to the refuelling system (02) by means of a seventh rigid pipe section (22).

10. A head piece according to any one of claims 1 to 9,
**characterised in that**
the head piece (01) is provided with a balance device (23) with which at least one pipe section (06, 12, 15, 18, 21) and/or at least one swivel joint (07, 13, 16, 19) and/or the refuelling coupling (03) is or are held suspended.

11. A head piece according to claim 10,
**characterised in that**
the balance device (23) holds at least the first rigid pipe section (06) suspended.

12. A head piece according to claim 11,
**characterised in that**
the balance device (23) braces the first rigid pipe section (06) against the second rigid pipe section (09).

13. A head piece according to any one of claims 10 to 12,
**characterised in that**
the balance device (23) consists of a preloaded spring assembly (24).

14. A head piece according to claim 13,
**characterised in that**
the preload of the spring assembly (24) is variable.

15. A head piece according to any one of claims 1 to 16 *[sic - recte 14],*
**characterised in that**
the head piece (01) is provided with a parallel lever actuator (25) with which the vertical swivel axis (14) of the fourth swivel joint (13) is held in its vertical position when the first rigid pipe section (06) swivels about the horizontal swivel axis (05) of the first swivel joint (04).

## Revendications

1. Tête de distribution (01) pour des systèmes de ravitaillement en carburant (02) mobiles ou stationnaires, comportant un raccord de distribution (03) pour le branchement à un réservoir, plusieurs tronçons de tube (06, 09, 12, 15, 18, 21, 22) rigides étant prévu pour la circulation du carburant, et les tronçons de tube (06, 09, 12, 15, 18, 21, 22) étant reliés à des articulations rotatives (04, 07, 10, 13, 16, 19) pour un agencement réglable dans l'espace du raccord de distribution, et au moins une première articulation rotative (04) étant apte à pivoter autour d'un axe de pivotement horizontal (05) pour le réglage en hauteur du raccord de distribution, et la première articulation rotative (04) étant reliée à une deuxième articulation rotative (07) directement adjacente par l'intermédiaire d'un premier tronçon de tube (06) rigide, et la deuxième articulation rotative (07) étant également apte à pivoter autour d'un axe de pivotement horizontal (08), et la première articulation rotative (04) étant reliée à une troisième articulation rotative (10) directement adjacente par l'intermédiaire d'un deuxième tronçon de tube (09) rigide, et la troisième articulation rotative (10) étant apte à pivoter autour d'un axe de pivotement vertical (11), et la deuxième articulation rotative (07) étant reliée à une quatrième articulation rotative (13) directement adjacente par l'intermédiaire d'un troisième tronçon de tube (12) rigide, et la quatrième articulation rotative (13) étant apte à pivoter autour d'un axe de pivotement vertical (14),
**caractérisée en ce que** la quatrième articulation rotative (13) est reliée à une cinquième articulation rotative (16) directement adjacente par l'intermédiaire d'un quatrième (15) tronçon de tube rigide, la cinquième articulation rotative (16) étant apte à pivoter autour d'un axe de pivotement horizontal (17).

2. Tête de distribution selon la revendication 1, **caractérisée en ce que** la deuxième articulation rotative (07) est agencée en aval de la première articulation rotative (04) dans le sens de distribution du carburant.

3. Tête de distribution selon la revendication 1 ou 2, **caractérisée en ce que** l'axe de pivotement horizontal (05) de la première articulation rotative (04) et l'axe de pivotement horizontal (08) de la deuxième articulation rotative (07) sont parallèles l'un à l'autre.

4. Tête de distribution selon l'une quelconque des revendications 1 à 3, **caractérisée en ce que** la troisième articulation rotative (10) est agencée en amont de la première articulation rotative (04) dans le sens de distribution du carburant.

5. Tête de distribution selon l'une quelconque des revendications 1 à 4, **caractérisée en ce que** la quatrième articulation rotative (13) est agencée en aval de la deuxième articulation rotative (07) dans le sens de distribution du carburant.

6. Tête de distribution selon l'une quelconque des revendications 1 à 5, **caractérisée en ce que** l'axe de pivotement vertical (11) de la troisième articulation rotative (10) et l'axe de pivotement vertical (14) de la quatrième articulation rotative (13) sont parallèles l'un à l'autre.

7. Tête de distribution selon l'une quelconque des revendications 1 à 6, **caractérisée en ce que** la cinquième articulation rotative (16) est reliée à une sixième articulation rotative (19) directement adjacente par l'intermédiaire d'un cinquième (18) tronçon de tube rigide, la sixième articulation rotative (19) étant apte à pivoter autour d'un axe de pivotement (20), qui est décalé de 90° par rapport à l'axe de pivotement horizontal (17) de la cinquième articulation rotative (16).

8. Tête de distribution selon la revendication 7, **caractérisée en ce que** la sixième articulation rotative (19) est reliée au raccord de distribution (03) par l'intermédiaire d'un sixième tronçon de tube (21) rigide.

9. Tête de distribution selon l'une quelconque des revendications 1 à 8, **caractérisée en ce que** la troisième articulation rotative (10) est reliée au système de ravitaillement en carburant (02) par l'intermédiaire d'un septième tronçon de tube (22) rigide.

10. Tête de distribution selon l'une quelconque des revendications 1 à 9, **caractérisée en ce qu'**il est prévu sur la tête de distribution (01) un dispositif d'équilibre (23), par lequel au moins un tronçon de tube (06, 12, 15, 18, 21) et/ou au moins une articulation rotative (07, 13, 16, 19) et/ou le raccord de distribution (03) sont maintenus en suspens.

11. Tête de distribution selon la revendication 10, **caractérisée en ce que** le dispositif d'équilibre (23) maintient en suspens au moins le premier tronçon de tube (06) rigide.

12. Tête de distribution selon la revendication 11, **caractérisée en ce que** le dispositif d'équilibre (23) supporte le premier tronçon de tube (06) rigide par rapport au deuxième tronçon de tube (09) rigide.

13. Tête de distribution selon l'une quelconque des revendications 10 à 12, **caractérisée en ce que** le dispositif d'équilibre (23) est formé par un bloc-ressort (24) précontraint.

14. Tête de distribution selon la revendication 13, **caractérisée en ce que** la précontrainte du bloc-ressort (24) est réglable.

15. Tête de distribution selon l'une quelconque des revendications 1 à 16, **caractérisée en ce que**, sur la tête de distribution (01), il est prévu un système d'entraînement à leviers parallèles (25), par lequel l'axe de pivotement vertical (14) de la quatrième articulation rotative (13) est maintenu dans sa position verticale lorsque le premier tronçon de tube (06) rigide pivote autour de l'axe de pivotement horizontal (05) de la première articulation rotative (04).
